# EUROPÄISCHE PATENTANMELDUNG

(11) **EP 1 650 593 A2**
(43) Veröffentlichungstag der Anmeldung: **26.04.2006**
(21) Anmeldenummer: 05020640.8
(22) Anmeldetag: 22.09.2005
(51) Int. Cl.: G02B 13/06

(54) **Weitwinkeloptik**

(30) Priorität: 01.10.2004 DE 102004047932
(71) Anmelder: Diehl BGT Defence GmbH & Co.KG, 88662 Überlingen (DE)
(72) Erfinder: Krogmann, Dirk, 88690 Uhldingen (DE); Tholl, Hans Dieter, Dr., 88690 Uhldingen (DE); Gross, Michael, Dr., 88682 Salem (DE)
(74) Vertreter: Diehl Patentabteilung

(57) **Zusammenfassung**

Die Erfindung betrifft eine Weitwinkeloptik (2, 40) mit einem Objektiv (4, 42) und einem einen gekrümmten Spiegel (6, 46) umfassenden Spiegelsystem zur Abbildung eines Weitwinkelbilds durch das Objektiv (4, 42) auf einen Detektor (10,44).

Es wird vorgeschlagen, dass zumindest ein Spiegel (8, 46) des Spiegelsystems relativ zum Objektiv (4, 42) beweglich angeordnet ist. Es können eine Zoomfunktion, ein großer Elevationsbereich und eine Auswahl eines vergrößerten Ausschnitts aus dem Weitwinkelbild erreicht werden.

## Beschreibung

Die Erfindung geht aus von einer Weitwinkeloptik mit einem Objektiv und einem einen gekrümmten Spiegel umfassenden Spiegelsystem zur Abbildung eines Weitwinkelbilds durch das Objektiv auf einen Detektor.

Rundumsichtkameras oder omnidirektionale Kameras bzw. 360°-Kameras sind sowohl aus dem Gebiet der Robotik zur Lenkung von mobilen Robotern als auch dem Gebiet der Webkameras für Internetkonferenzen bekannt. Die Kameras arbeiten im sichtbaren Spektralbereich und sind für Abstände von wenigen Metern bis einigen Metern geeignet. Eine solche Panoramakamera ist beispielsweise aus der Patentschrift US 6,424,377 B1 bekannt. Der Strahlengang der Kamera wird über einen konvex gekrümmten Spiegel gelenkt, durch den eine Rundumsicht erreicht werden kann.

Der Erfindung liegt die Aufgabe zugrunde, eine zur Raumüberwachung verbesserte Weitwinkeloptik anzugeben.

Diese Aufgabe wird durch eine Weitwinkeloptik der eingangs genannten Art gelöst, bei der erfindungsgemäß zumindest ein Spiegel des Spiegelsystems objektiv beweglich angeordnet ist. Durch einen beweglichen Spiegel kann ein Detail des Weitwinkelbilds vergrößert abgebildet werden. Mit der Verwendung eines Spiegels aus dem Spiegelsystem als beweglichen Spiegel können zusätzliche Spiegel eingespart werden, und die Panoramakamera kann kompakt gehalten werden.

Das Spiegelsystem kann einzig den gekrümmten Spiegel oder mehrere Spiegel umfassen. Der gekrümmte Spiegel ist insbesondere konvex gekrümmt und kann beispielsweise kegelförmig, sphärisch, parabolisch oder hyperbolisch gekrümmt sein. Durch das auf das Objektiv abgebildete Weitwinkelbild wird zweckmäßigerweise mindestens ein Halbkreis von der der Weitwinkeloptik benachbarten Umgebung abgebildet, insbesondere ist die Abbildung ein Rundumbild bzw. eine 360°-Abbildung mit einer Elevation von mindestens 40°, zweckmäßigerweise zwischen 40° und 90° und insbesondere über 100°. Die Weitwinkeloptik ist vorteilhafterweise in der Lage, in Bezug auf die Weitwinkeloptik entgegengesetzt angeordnete Gegenstände abzubilden. Die Weitwinkeloptik umfasst vorteilhafterweise neben dem gekrümmten Spiegel einen weiteren Spiegel, beispielsweise einen Planspiegel, der insbesondere kreisförmig ausgeführt sein kann. Der optische Strahlengang der Weitwinkeloptik weist mit Vorteil nur ein einziges effektives Projektionszentrum auf. Hierdurch ist es möglich, über geeignete mathematische Transformationen aus omnidirektionalen Bildern fehlerfreie panoramische Bilder (über zylindrische Projektion) oder perspektivische Bilder (über ebene Projektion) zu rekonstruieren.

In bevorzugter Ausgestaltung umfasst das Spiegelsystem neben dem gekrümmten Spiegel einen ebenen Spiegel als beweglichen Spiegel. Das Objektiv oder Teile des Objektivs können zusammen mit einem Sensor innerhalb des gekrümmten Spiegels angeordnet werden, so dass die Weitwinkeloptik klein bauend gestaltet werden kann.

In einer weiteren Ausgestaltung umfasst die Weitwinkeloptik eine durch das Objektiv und den beweglichen Spiegel verlaufende optische Achse. Hierdurch kann auf einfache Weise das gesamte Weitwinkelbild, vorteilhafterweise das Rundumbild, durch eine Bewegung des beweglichen Spiegels symmetrisch beeinflusst werden.

Ist der bewegliche Spiegel relativ zur optischen Achse verkippbar, so kann selektiv ein Teil des Weitwinkelbilds bzw. Rundumbilds herausgegriffen und beispielsweise vergrößert werden.

Zweckmäßigerweise ist zur Abbildung eines Gegenstands auf das Objektiv eine einfache oder zweifache Reflexion wählbar. Zur Abbildung des Weitwinkelbilds bzw. Rundumbilds auf das Objektiv kann der Strahlengang aus der Umgebung der Weitwinkeloptik an zwei Spiegeln des Spiegelsystems reflektiert werden, wodurch die Weitwinkeloptik baulich klein gehalten werden kann. Durch die Reduzierung des Strahlengangs von zweifacher Reflexion auf einfache Reflexion, bei der der Strahlengang nur an einem Spiegel des optischen Systems reflektiert wird, kann ein gewünschter Bereich des Weitwinkelbilds vergrößert und/oder entzerrter auf dem Detektor abgebildet werden.

Bevorzugt ist mit Hilfe des beweglichen Spiegels ein Strahlengang wählbar, der einen Gegenstand aus der Umgebung unter Umgehung des gekrümmten Spiegels auf dem Detektor abbildet. Es kann eine besonders verzerrungsfreie Abbildung eines Bereichs des Weitwinkelbilds auf das Objektiv erreicht werden. Zur Scharf stellung (Korrektur der Abbildung) kann das Kameraobjektiv parallel zur optischen Achse bewegt werden.

Zur Auswahl eines gewünschten Winkelbereichs aus dem Weitwinkelbild ist der bewegliche Spiegel vorteilhafterweise um die optische Achse rotierbar.

Vorzugsweise ist das Weitwinkelbild mit Hilfe des beweglichen Spiegels zoombar, insbesondere unter Beibehaltung des Azimutwinkels des Weitwinkelbilds. Details des Bilds können selektiv herausgegriffen und vergrößert werden. Bei einer Beibehaltung des Azimutwinkels kann die Rundumsicht von 360° trotz eines Zoomens beibehalten werden, wobei der Elevationsbereich des Weitwinkelbilds gezoomt und somit der Elevationswinkel verkleinert wird.

Eine Zoomfunktion kann auf besonders einfache Weise erreicht werden, wenn der bewegliche Spiegel durch eine Translation relativ zum Objektiv bewegbar ist.

In einer vorteilhaften Weiterbildung der Erfindung ist der gekrümmte Spiegel beweglich. Es kann eine Zoomfunktion mit nur einem einzigen Spiegel des Spiegelsystems erreicht werden. Dabei kann zur Scharfstellung (Korrektur der Abbildung) das Kameraobjektiv parallel zur optischen Achse bewegt werden.

Ein besonders einfaches Zoomen mit einem nur geringen oder sogar ohne ein unerwünschtes Verschieben des Elevationsbereichs des Weitwinkelbilds kann erreicht werden durch ein Mittel zur Verformung des beweglichen Spiegels. Hierbei kann die Bewegung des Spiegels relativ zum Objektiv durch die Verformung des Spiegels erreicht werden oder zusätzlich zu einer beispielsweise translatorischen Bewegung durchgeführt werden.

Zusätzlich ist die Erfindung gerichtet auf ein Kamerasystem mit einer wie oben beschriebenen Weitwinkeloptik, einem Detektor und einer Auswerteeinheit zur Bearbeitung des auf den Detektor abgebildeten Weitwinkelbilds.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Weitwinkelkamera mit einem sphärischen Spiegel und einem verkippbaren sowie verschiebbaren Planspiegel,
- Fig. 2: die Weitwinkelkamera aus Figur 1 mit dem Planspiegel in einer anderen Position,
- Fig. 3: die Weitwinkelkamera aus den Figuren 1 und 2 mit translatorisch bewegtem Planspiegel,
- Fig. 4: eine Weitwinkelkamera mit einem sphärischen Spiegel und einem verbiegbaren Planspiegel und
- Fig. 5: eine Weitwinkelkamera mit einem beweglichen sphärischen Spiegel.

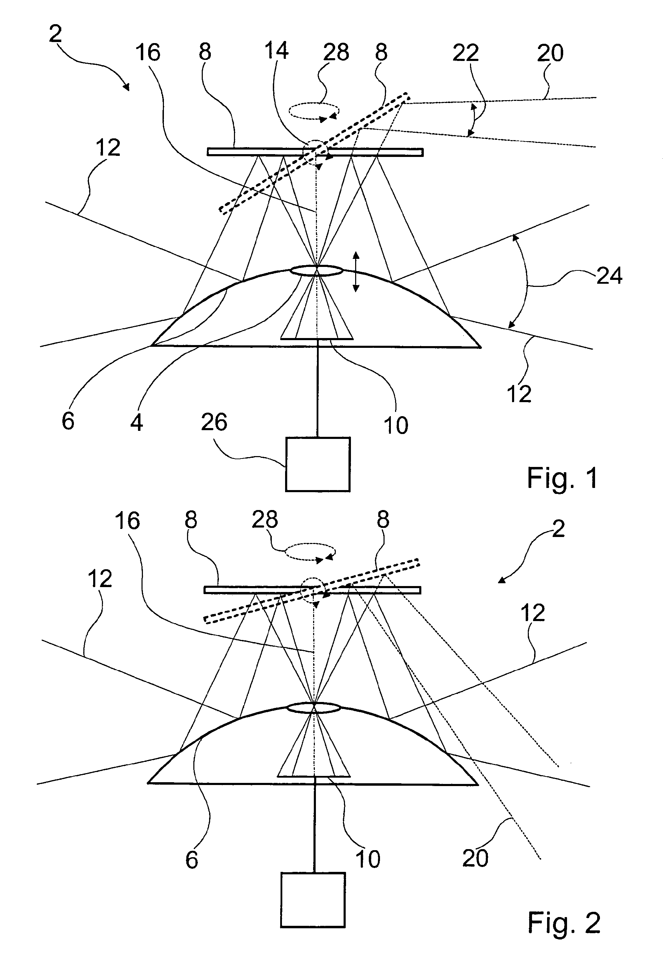

Figur 1 zeigt eine Weitwinkelkamera in einer schematischen Weise mit einer Weitwinkeloptik 2. Die Weitwinkeloptik 2 umfasst ein Objektiv 4, das der Übersichtlichkeit halber nur als eine Linse dargestellt ist. Außerdem umfasst die Weitwinkeloptik 2 einen konvex gekrümmten sphärischen Spiegel 6, der innerhalb der Apertur des Objektivs 4 lichtdurchlässig ist, so dass Licht von einem ebenen Spiegel 8 durch das Objektiv 4 auf einen Detektor 10 fallen kann. Außerhalb der Apertur des Objektivs 4 ist der sphärische Spiegel 6 reflektierend ausgeführt. In einem wie in Figur 1 durchgezogen dargestellten Strahlengang 12 wird ein Rundumbild aus der Umgebung der Weitwinkeloptik 2 durch die beiden Spiegel 6, 8 auf den Detektor 10 abgebildet.

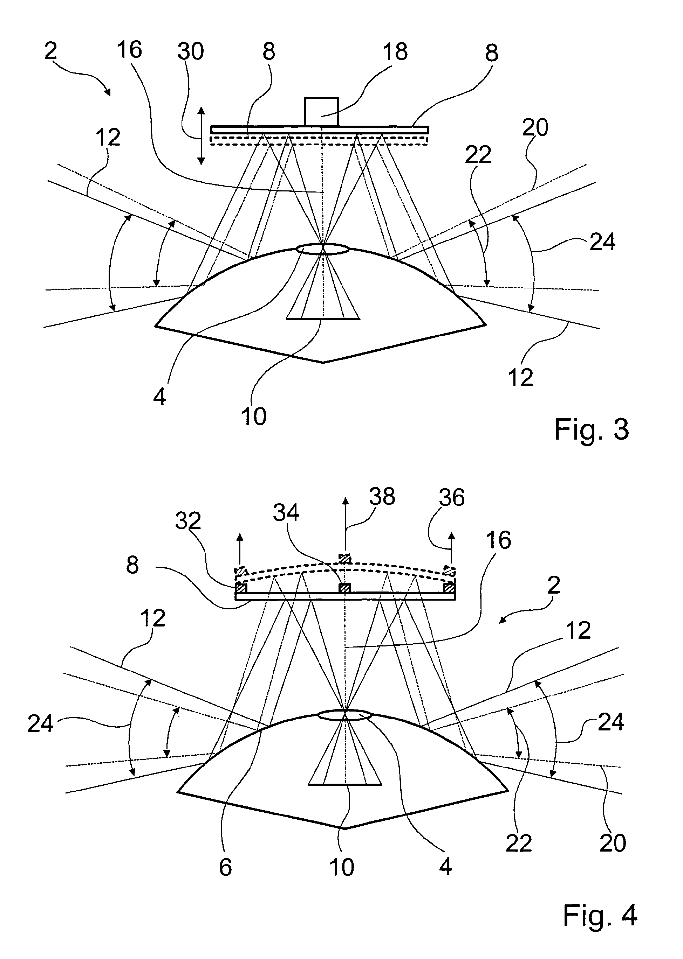

Der ebene Spiegel 8 ist - wie durch einen Doppelpfeil 14 dargestellt - relativ zu einer optischen Achse 16 mit Hilfe eines Motors 18, der der Übersichtlichkeit halber in Figur 1 nicht dargestellt ist, verkippbar. Ein solcher Motor 18 ist beispielsweise in Figur 3 dargestellt. Zum Betrachten eines Ausschnitts des Weitwinkelbilds kann der ebene Spiegel 8 kontinuierlich verkippt werden, bis er beispielsweise die in Figur 1 gestrichelt dargestellte Position erreicht. Hierdurch wird dieser Ausschnitt - wie durch einen gestrichelten Strahlengang 20 dargestellt - auf dem Detektor 10 abgebildet. Ein Elevationswinkel 22 des Strahlengangs 20 ist wesentlich geringer als ein Elevationswinkel 24 des Strahlengangs 12, weshalb der Ausschnitt durch den Strahlengang 20 wesentlich größer auf den Detektor 10 abgebildet wird als durch den Strahlengang 12.

Der Detektor 10 ist im infraroten Strahlungsbereich zwischen 8 µm und 12 µm empfindlich und umfasst Mikrobolometer. Mit dem Detektor 10 verbunden ist eine Auswerteeinheit 26, die eine Signalvorverarbeitungselektronik zur Entzerrung und Korrektur des auf den Detektor 10 abgebildeten Abbilds und eine Bild- und Signalverarbeitungselektronik sowie eine Kommandier- und Steuerelektronik zur Bewegung des ebenen Spiegels 8 und Schnittstellen zur Integration in ein Sensornetzwerk umfasst.

Figur 2 zeigt die Weitwinkeloptik 2 mit dem ebenen Spiegel 8 in einer etwas anderen verkippten Position. Der Strahlengang 20 ist hierbei knapp am sphärischen Spiegel 6 vorbeigelenkt, wodurch mit Hilfe der Weitwinkeloptik 2 ein Stück weit hinter den sphärischen Spiegel 6 geschaut werden kann. Hierdurch kann ein sehr großer Gesamtelevationswinkel der Weitwinkeloptik 2 von über 110° erzielt werden. Die ein Stück weit hinter dem sphärischen Spiegel 6 angeordnete Umgebungsszenerie ist durch den Strahlengang 12 nur sehr komprimiert auf den Detektor 10 abbildbar. Bei einer wie in Figur 2 gestrichelt eingezeichneten leicht verkippten Position des ebenen Spiegels 8 kann dieser Bereich entzerrt und entkomprimiert auf den Detektor 10 abgebildet werden. Um eine Rundumsicht zu ermöglichen, ist der ebene Spiegel 8 in Richtung des Doppelpfeils 28 um die optische Achse 16 um 360° schwenkbar. Zur Scharfstellung (Korrektur der Abbildung) kann das Objektiv 4 parallel zur optischen Achse 16 bewegt werden.

In Figur 3 ist die translatorische Beweglichkeit des ebenen Spiegels 8 der Weitwinkeloptik 2 dargestellt. Durch den Motor 18 ist der ebene Spiegel 8 nicht nur - wie in den Figuren 1 und 2 gezeigt - um die optische Achse 16 verkippbar und rotierbar, sondern auch parallel zur optischen Achse 16 verschiebbar gelagert, wie durch einen Doppelpfeil 30 angedeutet ist. Hierdurch wird eine Zoom-Funktion erreicht. Bei einer Verschiebung des ebenen Spiegels 8 parallel zur optischen Achse 16 in Richtung zum Objektiv 4 verschiebt sich der durchgezogen dargestellte Strahlengang 12 in den gestrichelten Strahlengang 20. Hierbei ist der Elevationswinkel 22 des Strahlengangs 20 kleiner als der Elevationswinkel 24 des Strahlengangs 12, wodurch ein Zoomen der Weitwinkelabbildung erreicht wird. Allerdings wird der Elevationswinkel 22 nicht nur verkleinert, sondern auch ein Stück weit nach oben verschoben, wodurch die Zoom-Funktion mit einer Verschiebung des Elevationsbereichs verbunden ist.

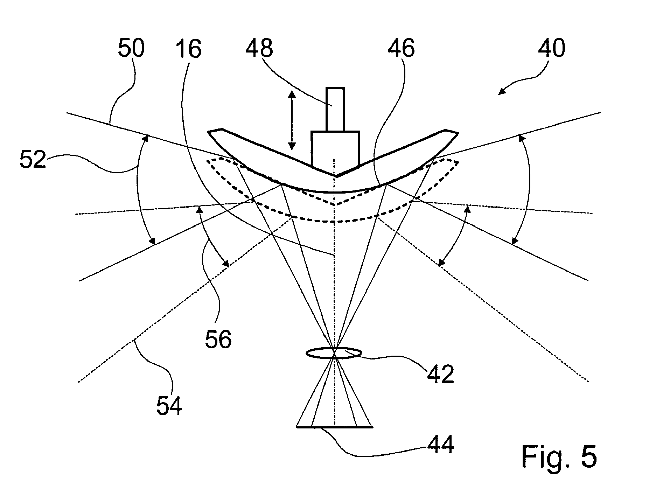

Um eine solche Verschiebung des Elevationsbereich gering zu halten oder zu eliminieren, kann der ebene Spiegel 8 verbiegbar ausgeführt sein, wie in Figur 4 in einer alternativen Weitwinkelkamera dargestellt ist. Im Wesentlichen gleich bleibende Bauteile sind grundsätzlich mit den gleichen Bezugszeichen beziffert. Ferner kann bezüglich gleich bleibender Merkmale und Funktionen auf die Beschreibung zum Ausführungsbeispiel in den Figuren 1 bis 3 verwiesen werden. Die nachfolgende Beschreibung beschränkt sich im Wesentlichen auf die Unterschiede zum Ausführungsbeispiel in den Figuren 1 bis 3. Der ebene Spiegel 8 ist kreisförmig ausgeführt und an seiner Außenkante mit einem Tragring 32 fest verbunden. Mit diesem Tragring 32 kann der ebene Spiegel 8 parallel zur optischen Achse 16 verschoben werden. In der Mitte des kreisförmigen Spiegels 8 ist ein Zugelement 34 mit dem Spiegel 8 fest verbunden, mit dem der mittlere Bereich des Spiegels 8 relativ zum Tragring 32 nach oben gezogen und damit der Spiegel 8 verbogen werden kann, wie dies gestrichelt in Figur 4 dargestellt ist. Hierdurch nimmt der Spiegel 8 eine parabolische Krümmung an. Wird der Spiegel 8 mit seinem Tragring 32 - wie durch Pfeile 36 angedeutet - nach oben verschoben und durch das Zugelement 34 - wie durch einen Pfeil 38 angedeutet - noch weiter nach oben gezogen, so wird der Strahlengang 12 aus der durchgezogen gezeichneten Position zur gestrichelt dargestellten Position verschoben. Hierbei wird der Elevationswinkel 24 zum Elevationswinkel 22 verkleinert, wobei der Elevationsbereich insgesamt nicht in der Höhe verschoben wird.

Eine andere Weitwinkelkamera ist in Figur 5 gezeigt. Die Weitwinkelkamera umfasst ein Weitwinkelobjektiv 40, das zur Abbildung eines Weitwinkelbilds durch ein Objektiv 42 auf einen Detektor 44 einen einzigen sphärischen Spiegel 46 umfasst. Zur Erzeugung einer Zoom-Funktion ist der sphärische Spiegel 46 mit Hilfe eines Motors 48 entlang der optischen Achse 16 des Weitwinkelobjektivs 40 verschiebbar, wie beispielsweise aus der durchgezogenen Position in die gestrichelt dargestellte Position. Hierdurch wird ein Strahlengang 50 mit einem Elevationswinkel 52 in einen Strahlengang 54 mit einem Elevationswinkel 56 verschoben. Der Elevationswinkel 56 ist kleiner als der Elevationswinkel 52, wodurch ein Zoomen des Weitwinkelbilds erreicht wird. Ähnlich wie bei der Weitwinkeloptik aus Figur 3 wird hierbei der Elevationsbereich des Strahlengangs 50 verschoben.

In den Figuren 1 bis 5 ist der gekrümmte Spiegel 6, 46 als sphärischer Spiegel dargestellt. Zur optischen Korrektur von Aberrationen können auch Kombinationen aus einem ebenen Spiegel 8 mit zylindrisch, parabolisch oder hyperbolisch gekrümmten Spiegeln vorteilhaft sein.

### Bezugszeichen

- 2: Weitwinkeloptik
- 4: Objektiv
- 6: Spiegel
- 8: Spiegel
- 10: Detektor
- 12: Strahlengang
- 14: Doppelpfeil
- 16: Achse
- 18: Motor
- 20: Strahlengang
- 22: Elevationswinkel
- 24: Elevationswinkel
- 26: Auswerteeinheit
- 28: Doppelpfeil

- 30: Doppelpfeil
- 32: Tragring
- 34: Zugelement
- 36: Pfeil
- 38: Pfeil
- 40: Weitwinkeloptik
- 42: Objektiv
- 44: Detektor
- 46: Spiegel
- 48: Motor
- 50: Strahlengang
- 52: Elevationswinkel
- 54: Strahlengang
- 56: Elevationswinkel

## Patentansprüche

1. Weitwinkeloptik (2, 40) mit einem Objektiv (4, 42) und einem einen gekrümmten Spiegel (6, 46) umfassenden Spiegelsystem zur Abbildung eines Weitwinkelbilds durch das Objektiv (4, 42) auf einen Detektor (10, 44),
**dadurch gekennzeichnet, dass** zumindest ein Spiegel (8, 46) des Spiegelsystems relativ zum Objektiv (4, 42) beweglich angeordnet ist.

2. Weitwinkeloptik (2, 40) nach Anspruch 1,
**dadurch gekennzeichnet, dass** das Spiegelsystem neben dem gekrümmten Spiegel (6, 46) einen ebenen Spiegel (8) als beweglichen Spiegel (8) umfasst.

3. Weitwinkeloptik (2, 40) nach Anspruch 1 oder 2, **gekennzeichnet durch** eine **durch** das Objektiv (4, 42) und den beweglichen Spiegel (8, 46) verlaufende optische Achse (16).

4. Weitwinkeloptik (2) nach Anspruch 3,
**dadurch gekennzeichnet, dass** der bewegliche Spiegel (8) relativ zur optischen Achse (16) verkippbar ist.

5. Weitwinkeloptik (2) nach einem der vorhergehenden Ansprüche,
**dadurch gekennzeichnet, dass** zur Abbildung eines Gegenstands durch das Objektiv (4, 42) eine einfache oder zweifache Reflexion wählbar ist.

6. Weitwinkeloptik (2) nach einem der vorhergehenden Ansprüche,
**dadurch gekennzeichnet, dass** mit Hilfe des beweglichen Spiegels (8) ein Strahlengang (20) wählbar ist, der einen Gegenstand aus einer Umgebung unter Umgehung des gekrümmten Spiegels (6) auf dem Detektor (10) abbildet.

7. Weitwinkeloptik (2) nach Anspruch 3,
**dadurch gekennzeichnet, dass** der bewegliche Spiegel (8) um die optische Achse (16) rotierbar ist.

8. Weitwinkeloptik (2, 40) nach einem der vorhergehenden Ansprüche,
**dadurch gekennzeichnet, dass** das Weitwinkelbild mit Hilfe des beweglichen Spiegels (8, 46) zoombar ist, insbesondere unter Beibehaltung des Azimutwinkels des Weitwinkelbilds.

9. Weitwinkeloptik (2, 40) nach einem der vorhergehenden Ansprüche,
**dadurch gekennzeichnet, dass** der bewegliche Spiegel (8, 46) durch eine Translation relativ zum Objektiv (4, 42) bewegbar ist.

10. Weitwinkeloptik (40) nach einem der vorhergehenden Ansprüche,
**dadurch gekennzeichnet, dass** der gekrümmte Spiegel (46) beweglich ist.

11. Weitwinkeloptik (2) nach einem der vorhergehenden Ansprüche, **gekennzeichnet durch** ein Mittel zur Verformung des beweglichen Spiegels (8).

12. Kamerasystem mit einer Weitwinkeloptik (2, 40) nach einem der vorhergehenden Ansprüche, einem Detektor (10, 44) und einer Auswerteeinheit (26) zur Bearbeitung des auf den Detektor (10, 44) abgebildeten Weitwinkelbilds.
